# EUROPÄISCHE PATENTSCHRIFT

(11) **EP 2 127 015 B1**
(45) Veröffentlichungstag und Bekanntmachung des Hinweises auf die Patenterteilung: **05.01.2011**
(21) Anmeldenummer: 08716064.4
(22) Anmeldetag: 27.02.2008
(51) Int. Cl.: H01M 10/50, H01M 2/20, H01M 2/30, H01M 2/06, H01M 2/08, H01M 2/10

(54) **BATTERIE MIT EINER WÄRMELEITPLATTE**
BATTERY WITH A HEAT CONDUCTING PLATE
BATTERIE COMPRENANT UNE PLAQUE THERMOCONDUCTRICE

(30) Priorität: 27.02.2007 DE 102007010745
(43) Veröffentlichungstag der Anmeldung: 02.12.2009
(73) Patentinhaber: Daimler AG, 70327 Stuttgart (DE)
(72) Erfinder: MEINTSCHEL, Jens, 73730 Esslingen (DE); SCHRÖTER, Dirk, 71364 Winnenden (DE); SCHULZ, Petra, 73730 Esslingen (DE)
(74) Vertreter: JENSEN & SON
(86) Internationale Anmeldenummer: PCT/EP2008/001528
(87) Internationale Veröffentlichungsnummer: WO 2008/104374

(56) Entgegenhaltungen:
- EP-A- 0 454 017
- EP-A- 1 030 388
- DE-C1- 10 003 740
- JP-A- 2002 056 904
- US-B1- 6 479 187

## Beschreibung

Die Erfindung betrifft eine Batterie mit einer Wärmeleitplatte zum Temperieren der Batterie gemäß dem Oberbegriff des Anspruchs 1, wie sie bspw. aus der gattungsbildend zugrunde gelegten DE 197 24 020 A1 als bekannt hervorgeht.

Die aus der zugrunde gelegten DE 197 24 020 A1 vorbekannte Batterie weist mehrere parallel und/oder seriell miteinander verschaltete Einzelzellen auf, die auf einer Wärmeleitplatte abgestellt und mit dieser wärmeleitend verbunden sind. In der Wärmeleitplatte ist ein Verdampferabschnitt eines Wärmerohrs angeordnet. Das Wärmerohr ist aus der Wärmeleitplatte, insbesondere aus dem Batteriegehäuse herausgeführt, wodurch sich der Kondensationsabschnitt des Wärmerohrs außerhalb der Wärmeleitplatte befindet. Mit dieser Ausgestaltung des Wärmerohrs kann die Wärmeleitplatte und damit die Einzelzellen temperiert, insbesondere im Betrieb gekühlt werden. Insbesondere bei Li-Ionen-Batterien kann eine Überladung und/oder eine hohe Stromentnahme zu einem starken Druckaufbau den Einzelzellen führen, der letztendlich zu einem Bersten des Zellengehäuses der betreffenden Einzelzelle führen kann. Um einen gezielten Druckabbau zu gewährleisten ist es sinnvoll, im Gehäuseboden der Einzelzelle eine Sollbruchstelle anzuordnen, an der die Einzelzelle gezielt Bersten kann. Zur Verbesserung dieses Druckabbaus ist es ferner sinnvoll, die Wärmeleitplatte unterhalb der Aufstellfläche der Einzelzellen mit durchgehenden Bohrungen bzw. Aussparungen - im Folgenden vereinfachend Berstfenster genannt - zu versehen. Der Durchmesser der Berstfenster ist geringfügig kleiner als der Außendurchmesser des Zellengehäuse. Dennoch führen die Berstfenster zu einer Verringerung des wirksamen Wärmeleitungsquerschnitts der Wärmeleitplatte, wodurch deren mögliche Effizienz verringert ist.

Die Aufgabe der Erfindung ist es, eine Batterie zu entwickeln, die bei einem möglichst guten Wirkungsgrad der Wärmeleitung und möglichst geringem Bauraum möglichst einfach uns kostengünstig zu realisieren ist.

Die Aufgabe wird mit einer Batterie mit den Merkmalen des Anspruchs 1. Durch die erfindungsgemäße Ausbildung einer Wärmeleitplatte kann diese nunmehr im Kopfbereich der Einzelzellen angeordnet werden. Zwar ist auch hier die Wärmeleitplatte mit Bohrungen zu versehen, jedoch ist deren Fläche wesentlich kleiner, so dass der mittlere flächenbezogene wirksame Wärmeleitungsquerschnitt vergrößert ist. Hierdurch wiederum ist es bei gleichbleibendem gesamtem Wärmeleitungsquerschnitt möglich, die Wärmeleitplatte dünner und damit leichter auszugestalten. An einen Pol einer Einzelzelle ist ein Einlegestück aus einem elektrisch isolierenden Werkstoff angeordnet, das zumindest bereichsweise am Mantel des Pols anliegt und das mindestens einen radial vom Pol abragenden Distanzhalter aufweist. Da der Distanzhalter im Bereich eines Pols zwischen dem Deckel der Einzelzelle und der Wärmeleitplatte angeordnet ist, kann hierdurch in zuverlässiger Weise ein Kurzschluss zwischen Wärmeleitplatte und/oder Zellengehäuse und/oder Pol unterbunden werden.

Von besonderem Vorteil ist ferner, dass durch diese Maßnahme auch fertigungstoleranzbedingte Unterschiede im Bereich dieser Bauteile ausgeglichen werden können.

In weiterer Ausgestaltung der Erfindung weist der Distanzhalter einen radial vom Pol abragenden und am Rand des Einlegestücks ununterbrochen durchgehend verlaufenden Distanzkragen auf. Mit dem Distanzkragen ist u.a. bei der Montage selbst bei größeren Toleranzen und/oder nem unachtsamen Zusammenbau bspw. einem Verdrehen des Einlegestücks, ein sicherer Abstand wischen Wärmeleitplatte und Zellendeckel gewährleistet.

In weiterer Ausgestaltung der Erfindung ist das Einlegestück aus einem wärmeleitenden Werkstoff gefertigt, wodurch auch der Pol zum Wärmemanagement verwendet werden kann.

In weiterer Ausgestaltung der Erfindung weisen beide Pole einer Einzelzelle ein einziges, vorzugsweise einteiliges Einlegestück auf ist. Hierdurch ist ebenfalls u.a. bei der Montage selbst bei größeren Toleranzen und/oder einem unachtsamen Zusammenbau bspw. einem Verdrehen des Einlegestücks, ein sicherer Abstand wischen Wärmeleitplatte und Zellendeckel gewährleistet.

In weiterer Ausgestaltung der Erfindung umfasst das Einlegestück insbesondere vollständig dem Mantel eines Pols, wodurch eine sichere leitplatte realisiert ist.

In besonderer Weise einer weiteren Ausgestaltung der Erfindung sind die Zellengehäuse und die Wärmeleitlatte miteinander verspannt. Durch diese Maßnahme konnte hierdurch der Spalt zwischen dem Deckel des Zellengehäusedeckels und der Wärmeleitplatte von einem Mindestmaß von 1,5 mm auf durchgehend etwa 0,5 mm verringert werden.

In weiteren Ausgestaltungen der Erfindung ist innerhalb des Batteriegehäuses in den Zwischenräumen zwischen der Wärmeleitplatte einerseits und den Polen, den elektrischen Zellverbindern, dem Zellendeckel und dem Batteriekastendeckel sowie in den Räumen zwischen den Einzelzellen eine elektrisch isolierende und bevorzugt wärmeleitfähige, besonders bevorzugt hoch wärmeleitfähige Vergussmasse und/oder ein elektrisch isolierender und bevorzugt wärmeleitfähiger, besonders bevorzugt hoch wärmeleitfähiger Schaum angeordnet ist mit einer elektrisch isolierenden und bevorzugt wärmeleitfähigen, besonders bevorzugt hoch wärmeleitfähigen Vergussmasse und/oder einem elektrisch isolierenden und bevorzugt wärmeleitfähigen, besonders bevorzugt hoch wärmeleitfähigen Schaum ausgefüllt. Hierdurch werden die genannten Räume innerhalb des Batteriegehäuses effizienter zur Wärmeleitung genutzt, wobei gleichzeitig die Stabilität des gesamten Batteriegehäuses erhöht ist. Insbesondere ist durch die Befüllung des Volumens im Bereich der Zellenverbinder und des Deckels der Einzelzellen in Verbindung mit dem Einlegestück die Wahrscheinlichkeit von Kriechströmen reduziert.

Erfindungsgemäße Einzelzellen können insbesondere für Hochleistungsbatterien, insbesondere zum zumindest teilweisen Antrieb eines Kraftfahrzeugs zur Personenbeförderung verwendet werden.

Weitere sinnvolle Ausgestaltungen der Erfindung sind den jeweiligen Unteransprüchen entnehmbar. Im Übrigen wird die Erfindung anhand von in den Zeichnungen dargestellten Ausführungsbeispielen näher erläutert. Dabei zeigt:
- Fig. 1: eine Batterie mit bodenseitig angeordneter Wärmeleitplatte,
- Fig. 2: einen Zellenstapel einer Batterie mit kopfseitig angeordneter Wärmeleitplatte in räumlicher Ansicht,
- Fig. 3: zwei Einzelzellen des Zellenstapels nach Figur 2 mit einem auf und mit einem oberhalb der Pole angeordnetem Einlegestück,
- Fig. 4: ein einteiliges Einlegestück für zwei Pole einer Einzelzelle
- Fig. 5: einen Schnitt durch das Einlegestück gemäß Figur 5 entlang der Linie V-V und
- Fig. 6: eine Ausschnittsvergrößerung eines Längsschnitt durch einen Zellenstapel gemäß Figur 2 in Seitenansicht.

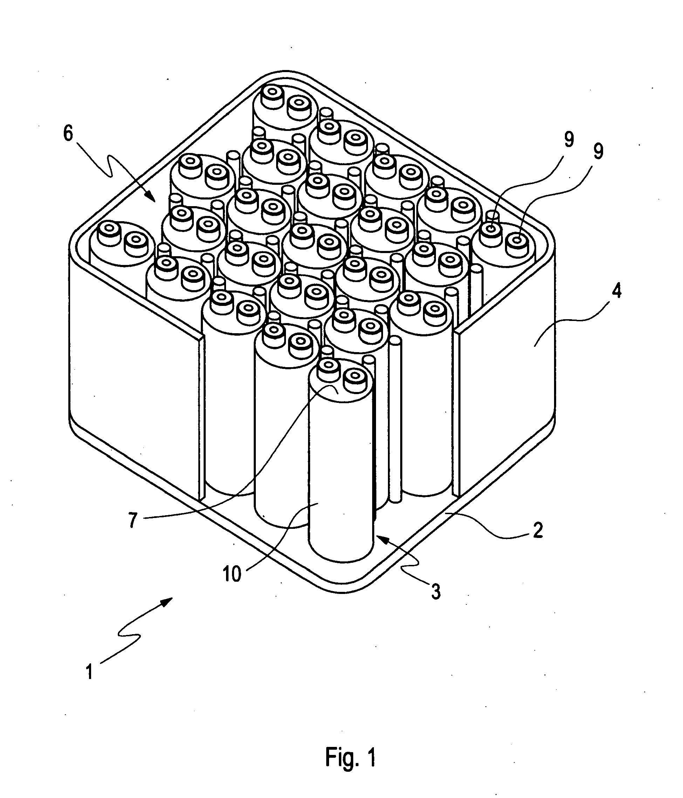

In Figur 1 ist eine übliche Batterie 1 mit bodenseitig angeordneter Wärmeleitplatte 2 dargestellt. Die Batterie 1 weist u.a. mehrere elektrisch miteinander verschaltete Einzelzellen 3 auf. Die im Querschnitt vorzugsweise runden Einzelzellen 3 sind in einem insbesondere vollständig geschlossenen Batteriegehäuse 4 angeordnet. Innerhalb des Batteriegehäuses 4 sind die Einzelzellen 3 auf der als Metallplatte ausgebildeten Wärmeleitplatte 2 wärmeleitend abgestellt. In der Wärmeleitplatte 2 sind Kühlkanale 5 zur Durchleitung eines Wärmeleitmediums angeordnet. Die Anordnung der Einzelzellen 3 auf der Wärmeleitplatte 2 erfolgt mit ihren Längsachsen parallel zueinander.

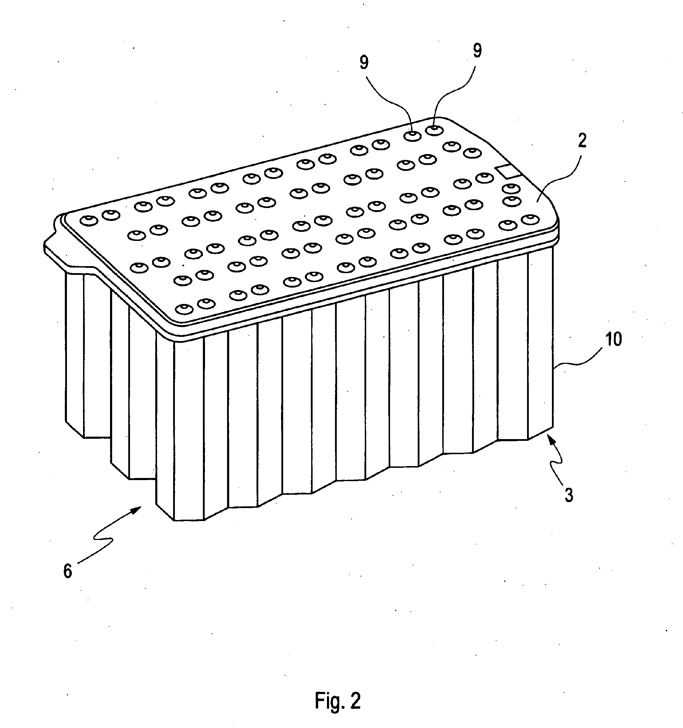

In Figur 2 ist ein aus mehreren Einzelzellen 3 gebildeter Zellenstapel 6 einer erfindungsgemäßen Batterie mit kopfseitig angeordneter Wärmeleitplatte 2 und damit wärmeleitend verbundene Einzelzellen 3 in räumlicher Ansicht dargestellt. Insbesondere aus Gründen der Packungsdichte der Einzelzellen 3 des vorliegenden Zellenstapels 6 ist in diesem Fall der Querschnitt der Einzelzellen 3 ein regelmäßiges Sechseck. Prinzipiell sind jedoch alle möglichen runde, ovale oder vieleckige Querschnitte und damit verbundenen zylindrische oder prismatische Ausgestaltungen von Einzelzellen 3 denkbar.

Die vorzugsweise aus einem Metall hergestellte Wärmeleitplatte 2, die zum Temperieren der Batterie vorgesehen ist, weist in ihrem Innern eine durchströmbare und von außerhalb betreibbare sowie durch Kühlkanäle 5 gebildete Kanalstruktur für ein Wärmeleitmedium auf. Erfindungsgemäß ist die Wärmeleitplatte 2 zwischen den Zellengehäusedeckeln 7 der Einzelzellen 3 und den elektrischen Zellenverbindern 8, die ungleichnamige Pole 9 benachbarter Einzelzellen 3 miteinander elektrisch verbinden, angeordnet. Die Pole 9 einer jeden Einzelzelle 3 sind über zugeordnete Bohrungen, die in der Wärmeleitplatte 2 angeordnet sind, sowohl elektrisch isoliert als auch bevorzugt wärmeleitend auf die dem Zellengehäusedeckel 7 der Einzelzellen 3 abgewandte Flachseite der Wärmeleitplatte 2 herausgeführt.

Bei der Verwendung einer erfindungsgemäße Batterie 1, insbesondere als Traktions- und/Traktionshilfebatterie eines Kraftfahrzeuges, können hierzu die Kühlkanäle 5 in sinnvoller Weise an eine bereits in dem Fahrzeug vorhandene Klimaanlage (nicht eingezeichnet) angeschlossen und wärmeseitig zumindest teilweise von dieser versorgt werden. Diese Wärmeversorgung kann direkt, bspw. über ein gemeinsames Wärmeleitmedium, insbesondere ein Fluid, mit der Klimaanlage verbunden sein. Sie kann auch indirekt, bspw. über einen Wärmetauscher mit der Klimaanlage zusammenwirken. In bevorzugter Weise kann das Wärmeleitmedium auch die aus dem klimatisierten Innenraum des Kraftfahrzeugs entweichende Luft sein und/oder durch diese Luft versorgt werden.

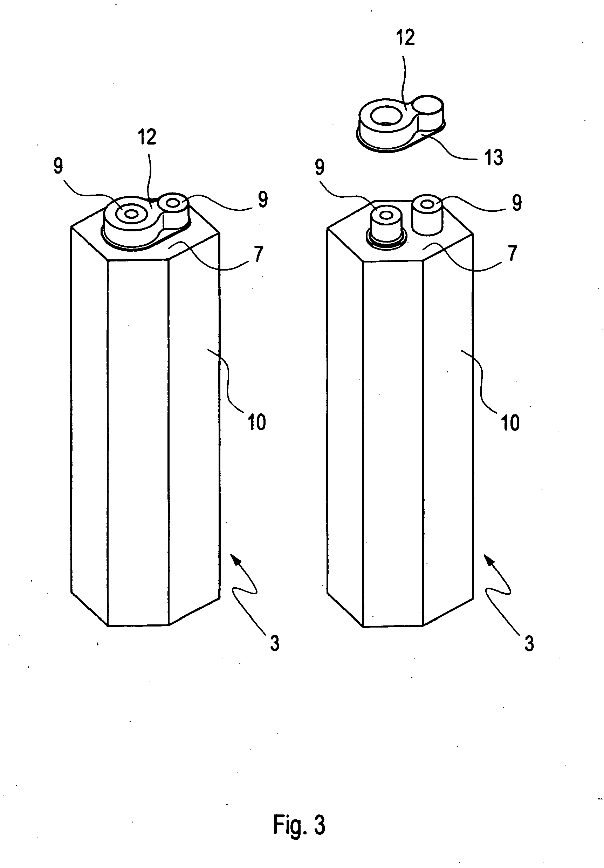

In Figur 3 sind zwei Einzelzellen 3 des Zellenstapels 6 nach Figur 2 dargestellt. Bei der einen, linken Einzelzelle 3 ist ein Einlegestück 12 direkt um die Pole 9 der Einzelzelle 3 herum und an diesen direkt anliegend angeordnet. Bei der zweiten, rechten Einzelzelle 3 ist das Einlegestück 12 abgehoben und oberhalb der Pole 9 dargestellt.

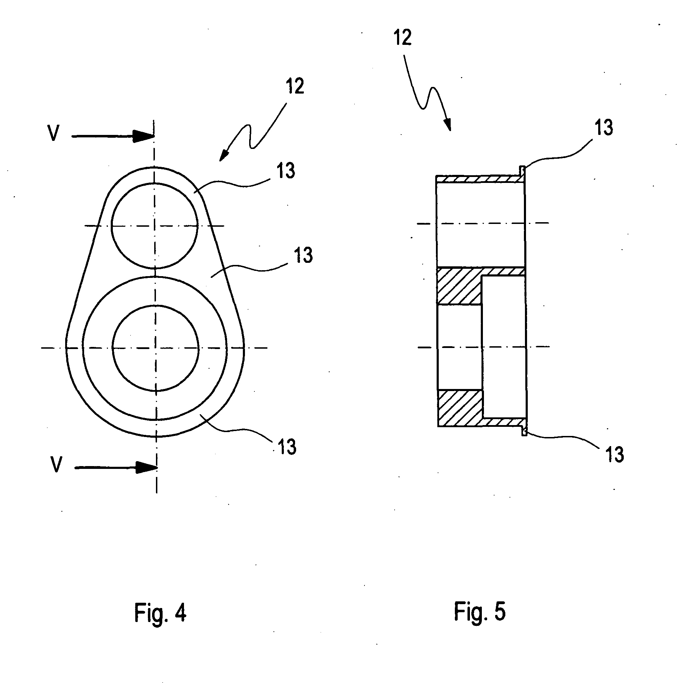

Wie in den Figuren 3 bis 5 dargestellt, ist das einteilige Einlegestück 12 an beiden Polen 9 der Einzelzelle 3 angeordnet. Aus Gründen der Verwechslungssicherheit bei einer Montage sind die beiden Pole 9 einer Einzelzelle 3 unterschiedlich ausgeformt. Da das Einlegestück 12 direkt an dem Mantel der Pole 9 anliegt und somit an die körperlichen Dimensionen der Pole 9 einer Einzelzelle 3 angepasst ist, sind die Durchführungen des an diese Ausgestaltung der Pole 9 angepassten Einlegestücks 12 entsprechend ausgebildet. Diese angepasste Ausbildung, bei der eine jede Durchführung des Einlegestücks 12 vollständig den Mantel des ihm zugehörigen Pols 9 umfasst, gewährleistet ebenfalls eine richtige Montage des Einlegestücks 12.

Das Einlegestück 12 ist aus einem elektrisch isolierenden und vorzugsweise auch einem insbesondere gut wärmeleitenden Werkstoff gefertigt. An dem dem Zellengehäusedeckel 7 zugeordneten Randbereich des Einlegestücks 12 ist ein radial vom Pol 9 abragender und ununterbrochen durchgehend verlaufender Distanzkragen 13 angeordnet, welcher zumindest bereichsweise distanzsichernd zwischen dem Zellengehäusedeckel 7 und der Wärmeleitplatte 2 angeordnet ist. Durch verspannende Maßnahmen bei der Herstellung werden die Wärmeleitplatte 2 und die Einzelzellen 3 zusammengepresst, wodurch der Distanzkragen 13 in bevorzugter Weise einen direkten Kontakt mit dem Zellengehäusedeckel 7 und der Wärmeleitplatte 2 aufweist. Durch den Distanzkragen 13 weist die Wärmeleitplatte 2 einen elektrisch isolierend wirkenden Abstand von den Zellengehäusedeckeln 7 auf. Ebenso ist die Wärmeleitplatte 2 mit Abstand von den Zellenverbindern 8 ebenfalls elektrisch isolierend angeordnet.

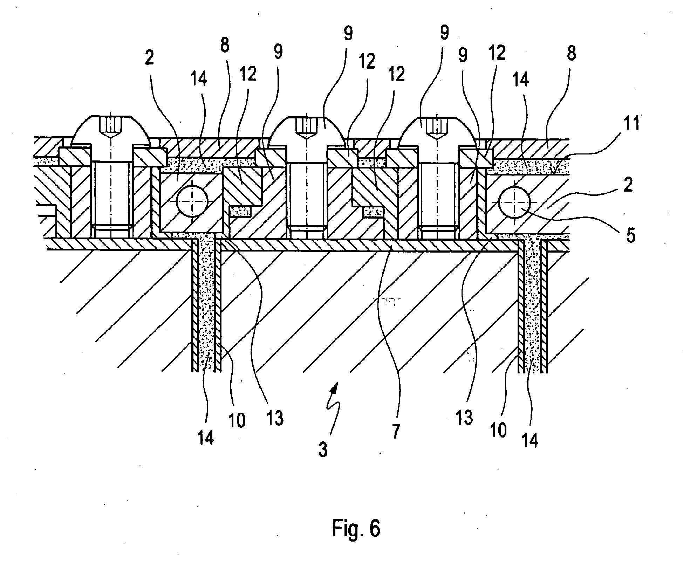

In Figur 6 ist ein Ausschnitt eines Längsschnitts durch einen erfindungsgemäßen Zellenstapel 6 in Seitenansicht dargestellt. Bei einer erfindungsgemäßen Batterie 1 mit einem Zellenstapel 6 gemäß Figur 2 ist die Wärmeleitplatte 2 kopfseitig und damit im Bereich der Pole 9 der Einzelzellen 3 angeordnet. Die Zellengehäuse 10 der parallel zu ihrer Längserstreckung.ausgerichteten Einzelzellen 3 weisen mantelseitig einen gegenseitigen Abstand zueinander auf. Beide Pole 9 einer Einzelzelle 3 sind durch eine einzige in der Wärmeleitplatte 2 angeordnete und diesen Polen 9 zugeordnete Bohrung auf die den Zellengehäusedeckeln 7 gegenüberliegende Flachseite 11 der Wärmeleitplatte 2 hindurchgeführt. Auf dieser Seite befinden sich die Zellenverbinder 8.

Da die Form und die lichten Maße einer derartigen Bohrung größer ist als die Außenbemaßungen um die Pole 9 einer Einzelzelle 3, weisen die durch die Bohrungen hindurchragenden Pole 9 überall einen Abstand von den Wandungen der Bohrung auf. Hierdurch berühren sich die Pole 9 und die Wärmeleitplatte 2 in keinem Fall, wodurch sie gegeneinander elektrisch isoliert sind. Die elektrische Isolierung wird insbesondere durch Einlegestücke 12 verbessert bzw. gewährleistet, die um die Pole 9 einer Einzelzelle 3 angeordnet sind.

Zur Verbesserung der gegenseitigen elektrischen Isolation der innerhalb des Batteriegehäuses 4 angeordneten Bauteile, zur Erhöhung der Stabilität des gesamten Batteriegehäuses 4 sowie zur Verbesserung der gesamten Wärmeleitfähigkeit ist in den Zwischenräumen zwischen der Wärmeleitplatte 2 einerseits und den Polen 9, sowie den elektrischen Zellverbindern 8 und dem Zellengehäusedeckel 7 als auch dem Deckel des Batteriegehäuses 4 eine elektrisch isolierende und bevorzugt wärmeleitfähige, besonders bevorzugt hoch wärmeleitfähige Vergussmasse 14 und/oder ein elektrisch isolierender und bevorzugt wärmeleitfähiger, besonders bevorzugt hoch wärmeleitfähiger Schaum angeordnet, der diese Zwischenräume bevorzugt vollständig ausfüllt.

Als Vergussmasse 14 haben sich insbesondere elektrisch isolierende, jedoch wärmeleitende Werkstoffe wie bevorzugt Polyurethan-Schäume, Epoxidharze und/oder Silikone bewährt. Mit diesen bevorzugten Werkstoffen werden die betreffenden Freiräume möglichst blasenarm und besonders bevorzugt blasenfrei ausgegossen. In günstiger Weise können die Werkstoffe für die Vergussmasse 14 durch Zugabe wärmeleitender Partikel, die in der Art eines gut gemischten Gemenges in dem Werkstoff verteilt angeordnet sind, hinsichtlich ihrer Wärmeleitung noch verbessert werden.

In zweckmäßiger Weise sind auch die Freiräume zwischen den Wänden benachbarter Zellengehäuse 10 und auch die Freiräume zwischen den Wänden der Zellengehäuse 10 und der Wandung des Batteriegehäuses 4 und/oder einem den Zellenstapel 6 aufnehmenden und vorzugsweise innerhalb des Batteriegehäuses 4 mit Abstand zu diesem angeordneten Zellenstapelbecher (nicht eingezeichnet) in der gleichen Weise ausgefüllt. Bei der Verwendung eines Zellenstapelbechers und damit eines quasi doppelwandigen Batteriegehäuses 4 kann dieser durch die Doppelwandung gebildete Zwischenraum zusätzlich noch von einem Wärmeleitmedium umströmt werden.

## Patentansprüche

1. Batterie mit einer Wärmeleitplatte zum Temperieren der Batterie, welche Batterie mehrere parallel und/oder seriell miteinander verschaltete Einzelteilen aufweist, die wärmeleitend mit der Wärmeleitplatte verbunden sind, ferner mit einer in der Wärmeleitplatte angeordneten und für ein Wärmeleitmedium durchströmbare Kanalstruktur, sowie mit aus der Wärmeleitplatte herausführenden Anschlussquerschnitten für die Kanalstruktur,
**dadurch gekennzeichnet, dass** die Wärmeleitplatte (2) im Bereich der Pole (9) der Einzelzellen (3) Bohrungen aufweist, dass die Pole (9) der Einzelzellen (3) durch die Bohrungen hindurch ragen, dass um einen Pol (9) einer Einzelzelle ein Einlegestück (12) aus einem elektrisch isolierendem Werkstoff angeordnet ist, dass das Einlegestück (12) zumindest bereichsweise am Mantel des Pols (9) anliegt, dass das Einlegestück (12) mindestens einen radial vom Pol (9) abragender Distanzhalter (13) aufweist und dass der Distanzhalter (13) des Einlegestücks (12) im Bereich des Pols (9) zwischen dem Zellengehäusedeckel (7) der Einzelzelle (3) und der Wärmeleitplatte (2) angeordnet ist.

2. Batterie nach Anspruch 1,
**dadurch gekennzeichnet, dass** der Distanzhalter (13) ein radial vom Pol (9) abragender und am Rand des Einlegestücks (12) ununterbrochen durchgehend verlaufender Distanzkragen (13) ist.

3. Batterie nach Anspruch 1,
**dadurch gekennzeichnet, dass** das Einlegestück (12) aus einem wärmeleitenden Werkstoff gefertigt ist.

4. Batterie nach Anspruch 1,
**dadurch gekennzeichnet, dass** beide Pole (9) einer Einzelzelle (3) ein einziges, vorzugsweise einteiliges Einlegestück (13) aufweisen.

5. Batterie nach Anspruch 1,
**dadurch gekennzeichnet, dass** das Einlegestück (12) zumindest weitgehend vollständig den Mantel eines Pols (9) umfasst.

6. Batterie nach Anspruch 1,
**dadurch gekennzeichnet, dass** die Wärmeleitplatte (2) aus Metall ist.

7. Batterie nach Anspruch 1,
**dadurch gekennzeichnet, dass** die lichte Weite der Bohrungen größer als der Außendurchmesser des jeweiligen Pols (9) ist.

8. Batterie nach Anspruch 1,
**dadurch gekennzeichnet, dass** die Form und die lichten Maße einer Bohrung größer als die Außenbemaßungen beider Pole (9) einer Einzelzelle (3) sind.

9. Batterie nach Anspruch 1,
**dadurch gekennzeichnet, dass** innerhalb des Batteriegehäuses (4) in dem Zwischenraum zwischen der Wärmeleitplatte (2) und den Polen (9) eine elektrisch isolierende und bevorzugt wärmeleitfähige, besonders bevorzugt hoch wärmeleitfähige Vergussmasse (14) und/oder ein elektrisch isolierender und bevorzugt wärmeleitfähiger, besonders bevorzugt hoch wärmeleitfähiger Schaum angeordnet ist.

10. Batterie nach Anspruch 1,
**dadurch gekennzeichnet, dass** innerhalb des Batteriegehäuses (4) in dem Zwischenraum zwischen der Wärmeleitplatte (2) und den elektrischen Zellverbindern (8) eine elektrisch isolierende und bevorzugt wärmeleitfähige, besonders bevorzugt hoch wärmeleitfähige Vergussmasse (14) und/oder ein elektrisch isolierender und bevorzugt wärmeleitfähiger, besonders bevorzugt hoch wärmeleitfähiger Schaum angeordnet ist.

11. Batterie nach Anspruch 1,
**dadurch gekennzeichnet, dass** innerhalb des Batteriegehäuses (4) in dem Zwischenraum zwischen der Wärmeleitplatte (2) und dem Zellengehäusedeckel (7) eine elektrisch isolierende und bevorzugt wärmeleitfähige, besonders bevorzugt hoch wärmeleitfähige Vergussmasse und/oder ein elektrisch isolierender und bevorzugt wärmeleitfähiger, besonders bevorzugt hoch wärmeleitfähiger Schaum angeordnet ist.

12. Batterie nach Anspruch 1,
**dadurch gekennzeichnet, dass** innerhalb des Batteriegehäuses (4) in dem Zwischenraum zwischen der Wärmeleitplatte (2) und dem Deckel des Batteriegehäuses (4) eine elektrisch isolierende und bevorzugt wärmeleitfähige, besonders bevorzugt hoch wärmeleitfähige Vergussmasse und/oder ein elektrisch isolierender und bevorzugt wärmeleitfähiger, besonders bevorzugt hoch wärmeleitfähiger Schaum angeordnet ist.

13. Batterie nach einem der Ansprüche 5 bis 8,
**dadurch gekennzeichnet, dass** der Zwischenraum vollständig von der Vergussmasse (14) und/oder dem Schaum ausgefüllt ist.

## Claims

1. Battery with a heat conducting plate for controlling the temperature of the battery, which battery comprises a plurality of individual cells connected in parallel and/or in series, which cells are connected to the heat conducting plate in a heat conducting manner, and further with a passage structure located in the heat conducting plate, through which a heat conducting medium can flow, and with connection cross-sections for the passage structure, which lead out of the heat conducting plate,
**characterised in that** the heat conducting plate (2) is provided with holes in the region of the poles (9) of the individual cells (3), **in that** the poles (9) of the individual cells (3) project through the holes, **in that** an insert piece (12) made of an electrically insulating material is placed around a pole (9) of an individual cell, **in that** at least a section of the insert piece (12) bears against the circumferential surface of the pole (9), **in that** the insert piece (12) is provided with at least one spacer (13) projecting radially from the pole (9), and **in that** the spacer (13) of the insert piece (12) is located in the region of the pole (9) between the cell cover (7) of the individual cell (3) and the heat conducting plate (2).

2. Battery according to claim 1,
**characterised in that in that** the space (13) is a spacer collar (13) which radially projects from the pole (9) and extends continuously along the edge of the insert piece (12).

3. Battery according to claim 1,
**characterised in that** the insert piece (12) is made of a heat conducting material.

4. Battery according to claim 1,
**characterised in that** both poles (9) of an individual cell (3) are provided with a single, preferably one-piece, insert piece (13).

5. Battery according to claim 1,
**characterised in that** the insert piece (12) surrounds the circumferential surface of a pole (9) at least to a large extent completely.

6. Battery according to claim 1,
**characterised in that** the heat conducting plate (2) is made of metal.

7. Battery according to claim 1,
**characterised in that** the inside diameter of the holes is greater than the outer diameter of the respective pole (9).

8. Battery according to claim 1,
**characterised in that** the shape and the inside dimensions of a hole are greater than the outside dimensions of the two poles (9) of an individual cell (3).

9. Battery according to claim 1,
**characterised in that**, within the battery box (4), in the space between the heat conducting plate (2) and the poles (9), there is/are provided an electrically insulating and preferably heat conducting, in particular highly heat conducting, insulating compound (14) and/or an electrically insulating and preferably heat conducting, in particular highly heat conducting, foam.

10. Battery according to claim 1,
**characterised in that**, within the battery box (4), in the space between the heat conducting plate (2) and the electric cell connectors (8), there is/are provided an electrically insulating and preferably heat conducting, in particular highly heat conducting, insulating compound (14) and/or an electrically insulating and preferably heat conducting, in particular highly heat conducting, foam.

11. Battery according to claim 1,
**characterised in that**, within the battery box (4), in the space between the heat conducting plate (2) and the cell cover (7), there is/are provided an electrically insulating and preferably heat conducting, in particular highly heat conducting, insulating compound and/or an electrically insulating and preferably heat conducting, in particular highly heat conducting, foam.

12. Battery according to claim 1,
**characterised in that**, within the battery box (4), in the space between the heat conducting plate (2) and the cover of the battery box (4), there is/are provided an electrically insulating and preferably heat conducting, in particular highly heat conducting, insulating compound and/or an electrically insulating and preferably heat conducting, in particular highly heat conducting, foam.

13. Battery according to any of claims 5 to 8,
**characterised in that** the space is completely filled with the insulating compound (14) and/or the foam.

## Revendications

1. Batterie comprenant une plaque thermoconductrice destinée à réguler la température de la batterie, ladite batterie présentant plusieurs éléments individuels connectés en parallèle et / ou en série qui sont reliés de façon thermoconductrice à la plaque thermoconductrice, comprenant également une structure de canaux disposée dans la plaque et pouvant être parcourue par un agent caloporteur, et des sections de raccord destinées à la structure de canaux et sortant de la plaque, **caractérisée en ce que** la plaque thermoconductrice (2) présente dans la zone de pôles (9) des éléments individuels (3) des orifices, **en ce que** les pôles (9) des éléments individuels (3) dépassent à travers les orifices, **en ce qu'**un pôle (9) d'un élément individuel (12) est entouré d'une pièce rapportée (12) en matériau électriquement isolant, **en ce que** la pièce rapportée (12) est en contact au moins par zones avec la partie périphérique du pôle (9) et **en ce que** la pièce rapportée (12) présente au moins un élément d'écartement (13) qui dépasse radialement du pôle (9) et **en ce que** l'élément d'écartement (13) de l'élément individuel (3) se trouve dans la zone du pôle (9) entre le couvercle (7) du boîtier de l'élément individuel (3) et la plaque thermoconductrice (2).

2. Batterie selon la revendication 1, **caractérisée en ce que** l'élément d'écartement (13) est une collerette d'écartement (13) dépassant radialement du pôle (9) et s'étendant de manière ininterrompue en continu sur le bord de la pièce rapportée (12).

3. Batterie selon la revendication 1, **caractérisée en ce que** la pièce rapportée (12) est réalisée dans un matériau thermoconducteur.

4. Batterie selon la revendication 1, **caractérisée en ce que** les deux pôles (9) d'un élément individuel (3) présentent une seule pièce rapportée (9), de préférence monobloc.

5. Batterie selon la revendication 1, **caractérisée en ce que** la pièce rapportée (12) entoure au moins presque entièrement la partie sphérique d'un pôle (9).

6. Batterie selon la revendication 1 **caractérisée en ce que** la partie thermoconductrice (2) est en métal.

7. Batterie selon la revendication 1, **caractérisée en ce que** la largeur intérieure des orifices est supérieure au diamètre extérieur de chaque pôle (9).

8. Batterie selon la revendication 1, **caractérisée en ce que** la forme et les dimensions intérieures d'un orifice sont supérieures aux dimensions extérieures des deux pôles (9) d'un élément individuel (3).

9. Batterie selon la revendication 1, **caractérisée en ce qu'**à l'intérieur du boîtier (4) de batterie dans l'espace intermédiaire entre la plaque thermoconductrice (2) et les pôles est disposée une masse de remplissage (14) électriquement isolante et de préférence thermoconductrice, de manière particulièrement préférée hautement thermoconductrice et / ou une mousse électriquement isolante et de préférence thermoconductrice et de manière particulièrement préférée hautement thermoconductrice.

10. Batterie selon la revendication 1, **caractérisée en ce qu'**à l'intérieur du boîtier (4) de batterie dans l'espace intermédiaire entre la plaque thermoconductrice (2) et les connexions (8) d'éléments est disposée une masse de remplissage (14) électriquement isolante et de préférence thermoconductrice, de manière particulièrement préférée hautement thermoconductrice et / ou une mousse électriquement isolante et de préférence thermoconductrice et de manière particulièrement préférée hautement thermoconductrice.

11. Batterie selon la revendication 1, **caractérisée en ce qu'**à l'intérieur du boîtier (4) de batterie dans l'espace intermédiaire entre la plaque thermoconductrice (2) et le couvercle du boîtier de cellule est disposée une masse de remplissage (14) électriquement isolante et de préférence thermoconductrice, de manière particulièrement préférée hautement thermoconductrice et / ou une mousse électriquement isolante et de préférence thermoconductrice et de manière particulièrement préférée hautement thermoconductrice.

12. Batterie selon la revendication 1, **caractérisée en ce qu'**à l'intérieur du boîtier (4) de batterie dans l'espace intermédiaire entre la plaque thermoconductrice (2) et le couvercle du boîtier (4) de batterie, est disposée une masse de remplissage électriquement isolante et de préférence thermoconductrice, de manière particulièrement préférée hautement thermoconductrice et / ou une mousse électriquement isolante et de préférence thermoconductrice et de manière particulièrement préférée hautement thermoconductrice.

13. Batterie selon la revendication 5 à 8, **caractérisée en ce que** l'espace intermédiaire est entièrement rempli d'une masse de remplissage (14) et / ou de mousse.
